# FASCICULE DE BREVET EUROPEEN

(11) **EP 2 627 872 B1**
(45) Date de publication et mention de la délivrance du brevet: **14.08.2019**
(21) Numéro de dépôt: 11771253.9
(22) Date de dépôt: 22.09.2011
(51) Int. Cl.: F01D 25/24, F02K 1/56, F02K 1/80, F02K 1/76, F16B 2/14, F16L 23/036, F16L 37/10

(54) **DISPOSITIF DE LIAISON D'UN CADRE AVANT D'INVERSEUR DE POUSSÉE À UN CARTER DE SOUFFLANTE, ET NACELLE INCORPORANT UN TEL DISPOSITIF**
VORRICHTUNG FÜR DEN ANSCHLUSS EINES SCHUBUMKEHRERFRONTRAHMENS AN EIN LÜFTERGEHÄUSE UND TRIEBWERKSGONDEL MIT EINER DERARTIGEN VORRICHTUNG
DEVICE FOR CONNECTING A THRUST REVERSER FRONT FRAME TO A FAN CASING AND NACELLE INCORPORATING SUCH A DEVICE

(30) Priorité: 11.10.2010 FR 1058212
(43) Date de publication de la demande: 21.08.2013
(73) Titulaire: Safran Nacelles, 76700 Gonfreville-l'Orcher (FR)
(72) Inventeur: BUNEL, Serge, F-76610 Le Havre (FR); PEYRON, Vincent, F-76620 Le Havre (FR); KIOUA, Hazem, F-76280 Saint Jouin Bruneval (FR); LESCURE, Jérôme, F-76100 Rouen (FR)
(74) Mandataire: Gaillarde, Frédéric F. Ch.
(86) Numéro de dépôt international: PCT/FR2011/052184
(87) Numéro de publication internationale: WO 2012/049386

(56) Documents cités:
- EP-A1- 0 333 919
- GB-A- 882 186
- US-A- 2 466 602
- US-A- 2 716 563
- US-A- 2 877 623
- US-A- 4 951 973

## Description

La présente invention se rapporte à un dispositif de liaison d'un cadre avant d'inverseur de poussée à un carter de soufflante, et à une nacelle incorporant un tel dispositif.

Comme cela est connu en soi, un ensemble propulsif d'aéronef comprend classiquement un turboréacteur logé à l'intérieur d'une nacelle.

Cette nacelle, qui permet notamment de caréner le turboréacteur et de canaliser vers celui-ci l'air provenant de l'extérieur, comprend typiquement une partie amont formant entrée d'air, une partie intermédiaire entourant le carter de la soufflante du turboréacteur, et une partie arrière intégrant un inverseur de poussée ainsi qu'une tuyère d'éjection du flux d'air froid.

A son extrémité amont, l'inverseur de poussée comporte un cadre avant de forme sensiblement annulaire, ayant une fonction structurante.

La liaison entre la partie arrière et la partie médiane de la nacelle s'effectue classiquement par un dispositif de liaison du cadre avant de l'inverseur de poussée au carter de la soufflante.

En général, ce dispositif de liaison consiste en une bride sensiblement annulaire solidaire du cadre avant, venant coopérer avec une rainure en forme de J ou de V formée en aval du carter de soufflante.

Etant donnée l'amplitude des efforts radiaux et axiaux en jeu à l'interface entre le cadre avant et le carter de la soufflante, il est nécessaire de prévoir que la rainure formée sur le carter de soufflante soit profonde, ce qui induit un encombrement et un poids relativement importants.

De plus, un tel dispositif de liaison n'est pas adapté au cas particulier où la partie arrière de nacelle est du type « O-Duct », c'est-à-dire du type annulaire monobloc, par opposition au cas d'une partie arrière du type « C-Duct », c'est-à-dire du type comprenant deux moitiés pouvant s'écarter l'une de l'autre pour les opérations de maintenance.

Un tel dispositif de liaison nécessite en effet une mise en place par ouverture de deux ou plusieurs quartiers de la partie arrière de nacelle, ce qui n'est pas possible avec une configuration « O-Duct », qui est par définition monobloc et non fractionnable.

La présente invention a ainsi notamment pour but de fournir un dispositif de liaison d'un cadre avant d'inverseur de poussée à un carter de soufflante qui permette une réduction d'encombrement et de poids, et qui soit compatible avec une partie arrière de nacelle du type « O-duct ».

On atteint ce but de l'invention avec un dispositif de liaison d'un cadre avant d'inverseur de poussée à un carter de soufflante selon la revendication 1, remarquable en ce qu'il comprend :
- une bride à créneaux solidaire dudit cadre avant,
- une pièce annulaire de réception de cette bride, solidaire dudit carter de soufflante, et
- une couronne à créneaux de forme complémentaire à celle de ladite bride, montée pivotante sur ladite pièce annulaire,
ladite bride à créneaux, ladite pièce annulaire et ladite couronne à créneaux étant conformées pour qu'une rotation de ladite couronne par rapport à ladite pièce annulaire ait pour effet de verrouiller cette bride contre cette pièce annulaire, par la coopération des créneaux respectifs de ladite bride et de ladite couronne.

Grâce à cet agencement particulier, on peut reprendre très efficacement les efforts radiaux et axiaux dans les deux sens, avec des créneaux présentant un encombrement sensiblement inférieur au dispositif de la technique antérieur.

Du fait de ses caractéristiques, le dispositif selon l'invention, qui fonctionne à la manière d'un raccord pompier, permet de fixer la bride à créneaux du cadre avant de l'inverseur de poussée à la pièce annulaire de réception de cette bride, solidaire du carter de soufflante, par translation de l'inverseur de poussée, puis rotation de la couronne à créneaux : outre le fait que ce mode de liaison est très simple et rapide à mettre en oeuvre (typiquement de l'ordre de 30 secondes), il est utilisable avec un inverseur de poussée monobloc du type « O-Duct ».

De plus, en cas de rupture d'une ou de plusieurs des dents formant les créneaux de la bride ou de la couronne, les dents adjacentes continuent de maintenir la cohésion de la liaison, ce qui offre un grand degré de sécurité.

Suivant d'autres caractéristiques optionnelles du dispositif de liaison selon l'invention :
- ladite pièce annulaire présente une lèvre radiale de butée contre les créneaux de ladite bride, recouverte par ladite couronne à créneaux ;
- ladite lèvre radiale présente une section en i ;
- ladite lèvre radiale présente une section en L : cette configuration particulière permet de réduire l'encombrement radial de la liaison ;
- ladite lèvre radiale et les créneaux de ladite bride présentent des surfaces de coopération mutuelle inclinées par rapport à un plan transversal : ceci permet de réaliser une liaison de type conique entre la bride de l'inverseur de poussée et la pièce annulaire de réception de cette bride, et ainsi de mettre sous précontrainte axiale et radiale les dents formant les créneaux de la bride du cadre avant ; on prévient de la sorte tout mouvement relatif axial ou radial de la bride par rapport à la pièce annulaire ;
- la valeur d'inclinaison desdites surfaces est de l'ordre de 30 degrés ;
- les dents desdits créneaux présentent des chanfreins circonférentiels : ces chanfreins facilitent l'engagement mutuel des dents ;
- ladite bride à créneaux et ladite pièce annulaire présentent des chanfreins radiaux : ces chanfreins facilitent l'engagement et le centrage de ladite bride avec ladite pièce annulaire ;
- les créneaux de ladite bride et de la dite couronne présentent une longueur circonférentielle plus grande à 12 heures qu'à 6 heures : ceci permet de mettre en engagement d'abord les créneaux situés à 12 heures puis les créneaux situés à 6 heures, ce qui facilite le raccord de la bride sur la pièce circonférentielle ;
- ladite pièce annulaire comporte un joint apte à être comprimé par ladite bride à créneaux: ce joint permet de réaliser l'étanchéité aérodynamique ;
- ladite couronne à créneaux comporte une rainure, traversée par des moyens de mise en rotation de ladite couronne ;
- lesdits moyens comprennent un pignon coopérant avec une crémaillère solidaire de ladite couronne à créneaux ;
- lesdits moyens comprennent une vis de commande coopérant avec un écrou solidaire de ladite couronne à créneaux.

La présente invention se rapporte également à une nacelle pour turboréacteur d'aéronef, remarquable en ce qu'elle incorpore un dispositif de liaison conforme à ce qui précède.

D'autres caractéristiques et avantages apparaîtront à la lumière de la description qui va suivre, et à l'examen des figures ci-annexées, dans lesquelles :
- la figure 1 représente, en perspective, un carter de soufflante de turboréacteur, ainsi qu'un dispositif de liaison selon l'invention d'un cadre avant d'inverseur de poussée à ce carter,
- la figure 2 est une vue de détail de la zone II de la figure 1,
- la figure 3 est une vue en coupe axiale de la zone II, au droit d'une dent de la bride à créneaux, lorsque la couronne à créneaux se trouve en position verrouillée,
- la figure 4 est une vue analogue à celle de la figure 3, prise au droit d'un creux de la bride à créneaux,
- la figure 5 est une vue analogue à celle de la figure 3, la couronne à créneaux se trouvant en position déverrouillée,
- la figure 6 est une vue en perspective analogue à celle de la figure 2, prise dans une zone où se trouvent des moyens de mise en rotation de la couronne à créneaux du dispositif selon l'invention,
- la figure 7 est une vue de détail de ces moyens de mise en rotation, une partie de la couronne à créneaux ayant été ôtée pour faciliter la compréhension,
- la figure 8 est une vue en perspective analogue à celle de la figure 6 d'un autre mode de réalisation des moyens de mise en rotation de la couronne à créneaux,
- la figure 9a est une vue analogue à celle de la figure 3 d'un autre mode de réalisation de la bride à créneaux et de la pièce annulaire de réception de cette bride du dispositif selon l'invention,
- la figure 9b est une vue analogue à celle de al figure 9a, prise au droit d'un creux de la bride à créneaux, et
- les figures 10 et 11 sont des vues analogues respectivement aux figures 3 et 4 d'un autre mode de réalisation de la bride à créneaux, de la pièce annulaire de réception de cette bride et de la couronne à créneaux du dispositif selon l'invention.

Sur l'ensemble de ces figures, des numéros identiques ou analogues désignent des organes ou ensembles d'organes identiques ou analogues.

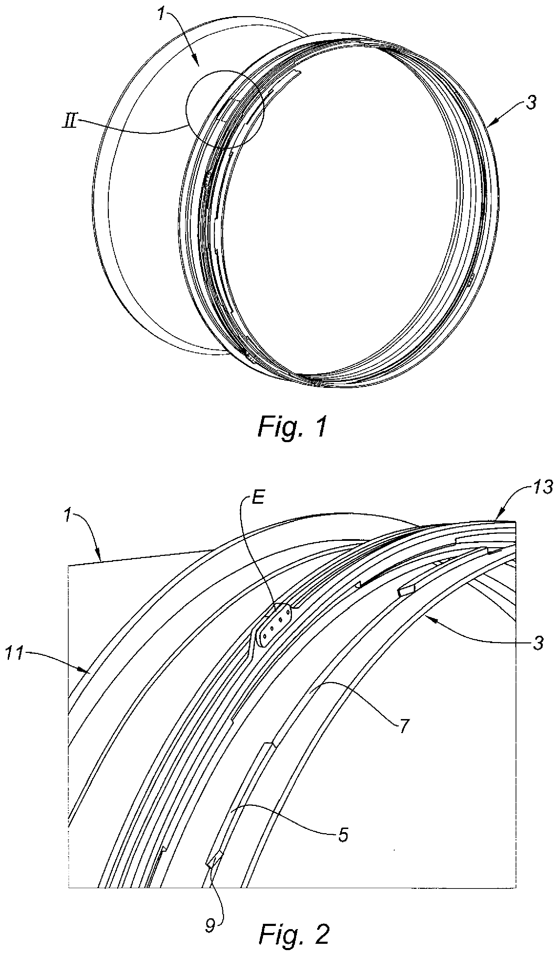

On se reporte à présent à la figure 1, sur laquelle on peut voir un carter de soufflante 1, présentant sensiblement la forme d'une virole annulaire.

Comme cela est connu en soi, ce carter est destiné à entourer une soufflante de turboréacteur, de manière à canaliser le flux d'air extérieur en direction des pales de cette soufflante.

En aval de ce carter de soufflante 1, c'est-à-dire à la droite de la figure 1, se trouve une partie arrière de nacelle (non représentée), incorporant typiquement un dispositif d'inversion de poussée.

Comme indiqué dans le préambule de la présente description, il importe de pouvoir fixer de manière très résistante l'inverseur de poussée au carter de soufflante 1.

Ceci s'effectue par l'intermédiaire d'un cadre avant d'inverseur de poussée (non représenté), présentant sensiblement une forme annulaire.

Selon l'invention, une bride à créneaux 3 est fixée rigidement sur ce cadre avant.

Comme cela est visible notamment sur cette figure 2, cette bride 3 comporte une succession de dents 5 et de creux 7 définissant des créneaux, les dents 5 étant de préférence munies chacune d'un chanfrein circonférentiel 9.

Sur le carter de soufflante 1, est fixée rigidement une pièce annulaire 11 de réception de la bride à créneaux 3.

Une couronne à créneaux 13 de forme complémentaire de celle de la bride à créneaux 3 est montée pivotante sur la pièce annulaire 11, une ou plusieurs éclisses E permettant de réaliser le montage des différentes sections formant la couronne 13 sur la pièce annulaire 11.

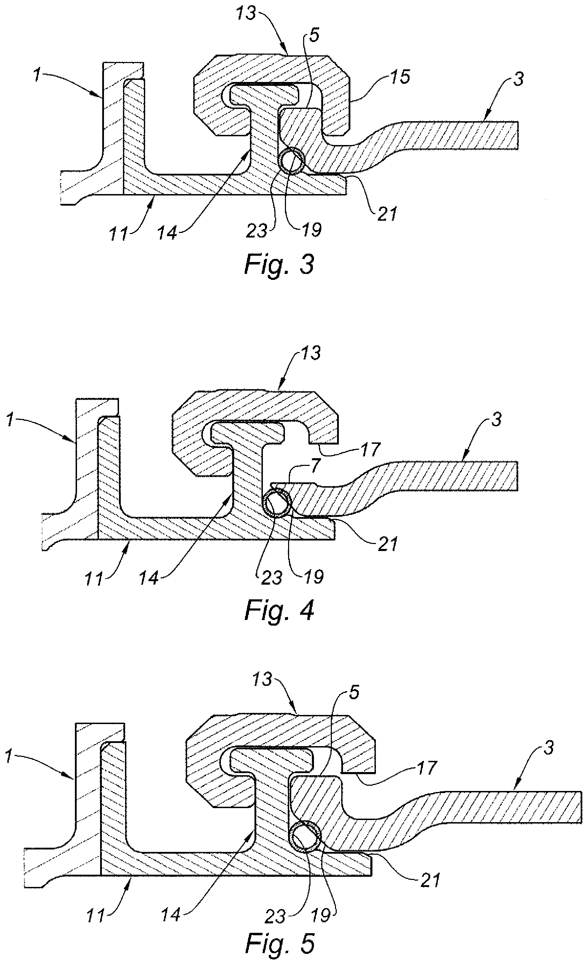

On se reporte à présent aux figures 3 à 5, sur lesquelles on peut voir de façon plus détaillée la manière dont coopèrent la bride à créneaux 3, la pièce annulaire 11 et la couronne à créneaux 13.

Comme on peut le voir sur ces figures, la pièce annulaire 1 comporte une lèvre 14 présentant une section en forme de i.

De manière analogue à la bride à créneaux 3, la couronne à créneaux 13 comporte quant à elle des dents 15 et des creux 17 définissant des créneaux complémentaires à ceux 5, 7 de la bride à créneaux 3.

Comme cela est visible sur les figures 3 et 4, lorsque la couronne à créneaux 13 se trouve en position verrouillée, les dents 15 de la couronne 13 bloquent les dents 5 de la bride 3 contre la lèvre en forme de i 14 de la pièce annulaire 11.

Du fait de la forme particulière en i de la lèvre 14, on réalise de la sorte un blocage coin contre coin des dents 5 contre la lèvre en i 14, permettant de supprimer toute possibilité de mouvement axial ou radial de la bride à créneaux 3 par rapport à la pièce annulaire 11.

De manière avantageuse, on pourra noter que des chanfreins radiaux 19, 21 réalisés respectivement dans la bride à créneaux 3 et dans la pièce annulaire 11, facilitent l'engagement axial mutuel de ces deux pièces, lors des opérations de connexion de l'inverseur de poussée au carter de soufflante 1.

On notera également qu'un joint 23 par exemple torique est avantageusement interposé entre le chanfrein 19 de la bride à créneaux 3 et la lèvre en i 14 de la pièce annulaire 11, de manière à réaliser l'étanchéité aérodynamique de la liaison.

La figure 5 représente le dispositif des figures 2 et 3 après pivotement de la couronne à créneaux 13 en vue de réaliser la déconnexion de l'inverseur de poussée du carter de soufflante 1.

Comme cela est visible sur cette figure, ce pivotement de la couronne à créneaux 13 par rapport à la pièce annulaire 11 a pour effet d'amener les creux 17 de cette couronne en vis-à-vis des dents 5 de la bride à créneaux 3, permettant le désengagement de cette bride, ainsi donc que de l'ensemble d'inversion de poussée (non représenté), de la pièce annulaire 11.

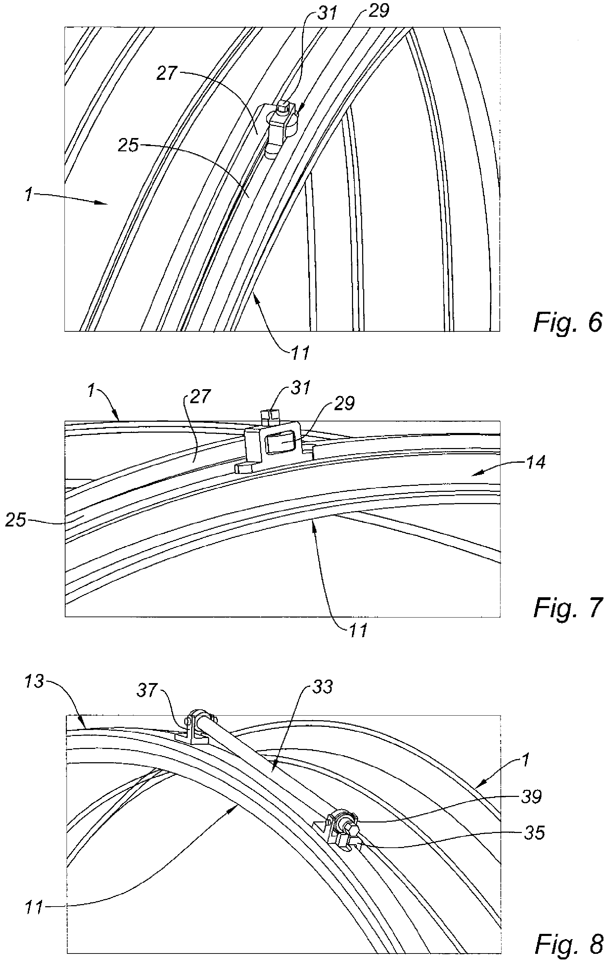

Les figures 6 et 7 montrent un mode de réalisation de moyens permettant de réaliser le pivotement de la couronne à créneaux 13 par rapport à la pièce annulaire 11.

Dans ce mode de réalisation, ces moyens comprennent une rainure 25 réalisée dans la couronne à créneaux 13, ainsi qu'une crémaillère circonférentielle 27 solidaire de la couronne 13 et longeant la rainure 25, ainsi qu'un pignon 29 monté rotatif autour d'un axe sensiblement radial, solidaire de la pièce annulaire 1.

Ce pignon 29 est surmonté d'une empreinte 31 permettant la mise en place d'une clé d'actionnement de forme complémentaire.

Pour mettre en rotation la couronne à créneaux 13, il suffit d'agir sur l'empreinte 31 au moyen de ladite clé, ce qui a pour effet de faire pivoter le pignon 29, et ainsi d'entraîner la crémaillère 27, et finalement de faire pivoter circonférentiellement la couronne à créneaux 13 autour de l'axe commun de la pièce annulaire 11 et du carter de soufflante 1.

Dans un autre mode de réalisation représenté à la figure 8, on prévoit une vis de commande s'étendant selon une direction sensiblement tangente à la couronne à créneaux 13, dont une extrémité est fixée à un premier étrier 35 traversant la rainure 25 et fixé de manière solidaire à la pièce annulaire 11, et dont une autre extrémité coopère avec un écrou monté sur un deuxième étrier 37 solidaire de la couronne à créneaux 13.

La vis de commande 33 comporte une empreinte 39 permettant son actionnement par une clé de forme appropriée.

Pour réaliser le pivotement de la couronne à créneaux 13 par rapport à la pièce annulaire 11, il suffit d'actionner en rotation la vis de commande 33, ce qui a pour effet de rapprocher ou d'éloigner les deux étriers 35, 37 l'un de l'autre, et ainsi de réaliser le pivotement souhaité.

Ce pivotement permet de réaliser le verrouillage ou le déverrouillage de la bride à créneaux 3 par rapport à la pièce annulaire 11.

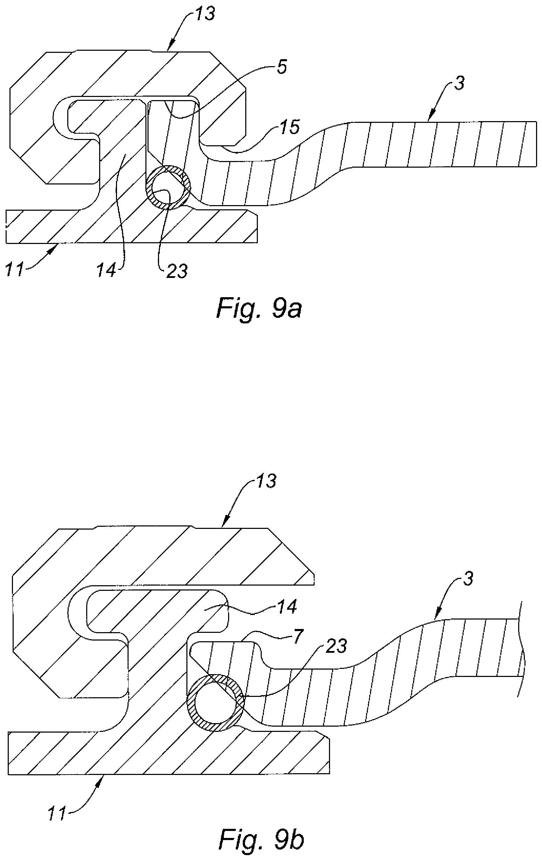

Dans la variante représentée à la figure 9a, on peut voir que la lèvre 14 de la pièce annulaire 11 présente une section en L et non en i comme dans le mode de réalisation exposé ci-dessus, ce qui permet de faire en sorte que la longueur radiale de cette lèvre 14 ne soit pas supérieure à celle des dents 5 de la bride à créneaux 3, ce qui permet de gagner en encombrement radial du dispositif de liaison selon l'invention.

Comme on peut le voir à la figure 9b, dans la zone de creux 7 de la bride à créneaux 3, ces creux 7 viennent en butée contre la lèvre 14 de la pièce annulaire 11, ce qui permet de ne pas surcharger les créneaux de la couronne 13 par des efforts radiaux, par ailleurs déjà fort sollicités par la reprise des efforts axiaux transmis par la bride 3.

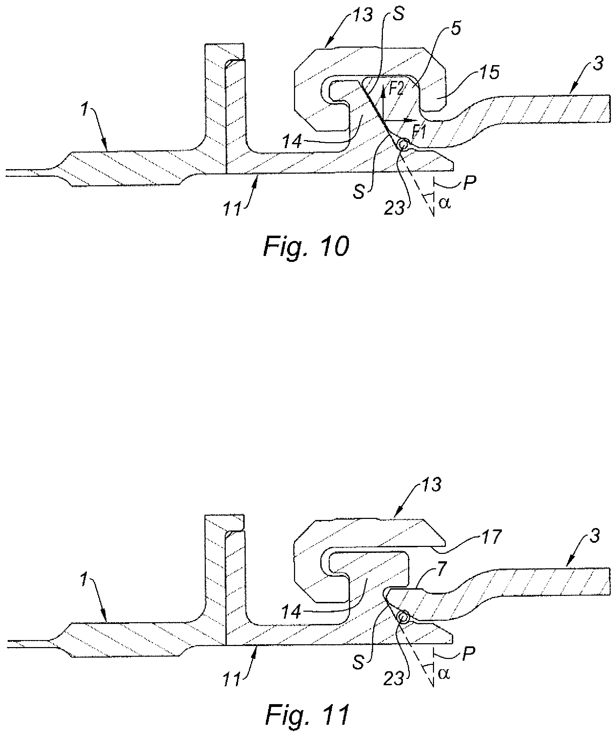

De manière avantageuse, comme cela est visible sur les figures 10 et 11, on peut prévoir que la surface S de coopération mutuelle des dents 5 avec la lèvre 14 soit inclinée d'un angle α typiquement de 30° par rapport à un plan transversal P.

Cette inclinaison particulière de la surface S permet d'engendrer d'une part un effort axial F1 et d'autre part un effort radial F2 sur les dents 5 de la bride à créneaux 3, lors du verrouillage de la couronne à créneaux 13, lesquels efforts permettent de réaliser des précontraintes évitant tout jeu entre ces pièces, et donc toute usure consécutive.

De manière préférée, cette précontrainte est assurée par une réduction de la longueur circonférentielle de la couronne à créneaux 13, par exemple au moyen d'un verrou à genouillère (c'est-à-dire à effet de levier) ou à trois points, disposé en lieu et place des éclisses E.

Comme on peut le comprendre à la lumière de l'exposé qui précède, le dispositif de liaison selon l'invention est une conception extrêmement simple, analogue à un raccord pompier que l'on peut utiliser pour connecter entre elles des conduites de circulation de fluide.

Ce dispositif pour liaison permet une connexion et une déconnexion de l'inverseur de poussée au carter de soufflante dans un temps très court, ce qui est très avantageux pour les opérations de maintenance.

De plus, ce dispositif de liaison est particulièrement adapté au cas où l'inverseur de poussée est du type « O-Duct », c'est-à-dire dans le cas où cet inverseur de poussée est monobloc, et ne peut être facilement relié au carter de soufflante avec des dispositifs d'une rainure en forme de J ou de V de la technique antérieure.

Bien entendu, la présente invention n'est nullement limitée aux modes de réalisation décrits et représentés, fournis à tire de simples exemples.

## Revendications

1. Dispositif de liaison d'un cadre avant d'inverseur de poussée à un carter de soufflante (1), comprenant :
- une bride à créneaux (3) solidaire dudit cadre avant,
- une pièce annulaire (11) de réception de cette bride (3), solidaire dudit carter de soufflante (1), et
- une couronne à créneaux (13) de forme complémentaire à celle de ladite bride (3), montée pivotante sur ladite pièce annulaire (11),
ladite bride à créneaux (3), ladite pièce annulaire (11) et ladite couronne à créneaux (13) étant conformées pour qu'une rotation de ladite couronne (13) par rapport à ladite pièce annulaire (11) ait pour effet de verrouiller cette bride (3) contre cette pièce annulaire (11), par la coopération des créneaux respectifs de ladite bride (3) et de ladite couronne (13), et
ladite pièce annulaire (11) présentant une lèvre radiale (14) de butée contre les créneaux de ladite bride (3), recouverte par ladite couronne à créneaux (13)
**caractérisé en ce que** la bride à créneaux (3) comporte une succession de dents (5) et de creux (7) définissant des créneaux et **en ce que** la couronne à créneaux (13) comporte des dents (15) et des creux (17) définissant des créneaux complémentaires aux dents (5) et aux creux (7) de la bride à créneaux (3).

2. Dispositif de liaison selon la revendication 1, **caractérisé en ce que** ladite lèvre radiale (14) présente une section en i.

3. Dispositif de liaison selon la revendication 1, **caractérisé en ce que** ladite lèvre radiale (14) présente une section en L.

4. Dispositif de liaison selon la revendication 3, **caractérisé en ce que** ladite lèvre radiale (14) et les créneaux de ladite bride (3) présentent des surfaces de coopération mutuelle (S) inclinées par rapport à un plan transversal.

5. Dispositif de liaison selon la revendication 4, **caractérisé en ce que** la valeur d'inclinaison (a) desdites surfaces est de l'ordre de 30 degrés.

6. Dispositif de liaison selon l'une quelconque des revendications précédentes, **caractérisé en ce que** les dents (5) desdits créneaux présentent des chanfreins circonférentiels (9).

7. Dispositif de liaison selon l'une quelconque des revendications précédentes, **caractérisé en ce que** ladite bride à créneaux et ladite pièce annulaire présentent des chanfreins radiaux (19, 21).

8. Dispositif de liaison selon l'une quelconque des revendications précédentes, **caractérisé en ce que** les créneaux de ladite bride (3) et de ladite couronne (13) présentent une longueur circonférentielle plus grande à 12 heures qu'à 6 heures.

9. Dispositif de liaison selon l'une quelconque des revendications précédentes, **caractérisé en ce que** ladite pièce annulaire (11) comporte un joint (23) apte à être comprimé par ladite bride à créneaux (3).

10. Dispositif de liaison selon l'une quelconque des revendications précédentes, **caractérisé en ce que** ladite couronne à créneaux (13) comporte une rainure (25), traversée par des moyens de mise en rotation de ladite couronne.

11. Dispositif de liaison selon la revendication 10, **caractérisé en ce que** lesdits moyens comprennent un pignon (23) coopérant avec une crémaillère (27) solidaire de ladite couronne à créneaux (13).

12. Dispositif de liaison selon la revendication 10, **caractérisé en ce que** lesdits moyens comprennent une vis de commande (33) coopérant avec un écrou solidaire de ladite couronne à créneaux (13).

13. Nacelle pour turboréacteur d'aéronef, **caractérisée en ce qu'**elle incorpore un dispositif de liaison conforme à l'une quelconque des revendications précédentes.

## Patentansprüche

1. Vorrichtung zum Verbinden eines vorderen Rahmens eines Schubumkehrers mit einem Gebläsegehäuse (1), umfassend:
- einen Zinnenflansch (3), der fest mit dem vorderen Rahmen verbunden ist,
- ein ringförmiges Teil (11) zum Aufnehmen dieses Flansches (3), das fest mit dem Gebläsegehäuse (1) verbunden ist, und
- einen Zinnenkranz (13) von zu derjeniger des Flansches (3) komplementärer Form, der schwenkbar am ringförmigen Teil (11) montiert ist,
wobei der Zinnenflansch (3), das ringförmige Teil (11) und der Zinnenkranz (13) so ausgestaltet sind, dass ein Drehen des Kranzes (13) in Bezug auf das ringförmige Teil (11) zur Wirkung hat, dass dieser Flansch (3) durch das Zusammenwirken der jeweiligen Zinnen des Flansches (3) und des Kranzes (13) am ringförmigen Teil (11) verriegelt wird, und
wobei das ringförmige Teil (11) eine radiale Lippe (14) zur Anlage an den Zinnen des Flansches (3) aufweist, die vom Zinnenkranz (13) bedeckt ist,
**dadurch gekennzeichnet, dass** der Zinnenflansch (3) eine Abfolge von Zähnen (5) und von Lücken (7) umfasst, die Zinnen definieren, und dadurch, dass der Zinnenkranz (13) Zähne (15) und Lücken (17) umfasst, die Zinnen definieren, welche zu den Zähnen (5) und den Lücken (7) des Zinnenflansches (3) komplementär sind.

2. Verbindungsvorrichtung nach Anspruch 1, **dadurch gekennzeichnet, dass** die radiale Lippe (14) einen i-förmigen Querschnitt aufweist.

3. Verbindungsvorrichtung nach Anspruch 1, **dadurch gekennzeichnet, dass** die radiale Lippe (14) einen L-förmigen Querschnitt aufweist.

4. Verbindungsvorrichtung nach Anspruch 3, **dadurch gekennzeichnet, dass** die radiale Lippe (14) und die Zinnen des Flansches (3) Flächen zum wechselseitigen Zusammenwirken (S) aufweisen, die in Bezug auf eine Querebene geneigt sind.

5. Verbindungsvorrichtung nach Anspruch 4, **dadurch gekennzeichnet, dass** der Neigungswert (a) der Flächen in der Größenordnung von 30 Grad liegt.

6. Verbindungsvorrichtung nach einem der vorstehenden Ansprüche, **dadurch gekennzeichnet, dass** die Zähne (5) der Zinnen Umfangsfasen (9) aufweisen.

7. Verbindungsvorrichtung nach einem der vorstehenden Ansprüche, **dadurch gekennzeichnet, dass** der Zinnenflansch und das ringförmige Teil radiale Fasen (19, 21) aufweisen.

8. Verbindungsvorrichtung nach einem der vorstehenden Ansprüche, **dadurch gekennzeichnet, dass** die Zinnen des Flansches (3) und des Kranzes (13) eine Umfangslänge von mehr als 12 Stunden bis 6 Stunden aufweisen.

9. Verbindungsvorrichtung nach einem der vorstehenden Ansprüche, **dadurch gekennzeichnet, dass** das ringförmige Teil (11) eine Dichtung (23) umfasst, die vom Zinnenflansch (3) komprimiert werden kann.

10. Verbindungsvorrichtung nach einem der vorstehenden Ansprüche, **dadurch gekennzeichnet, dass** der Zinnenkranz (13) eine Nut (25) umfasst, die von Mitteln zum Drehen des Kranzes durchlaufen wird.

11. Verbindungsvorrichtung nach Anspruch 10, **dadurch gekennzeichnet, dass** die Mittel ein Zahnrad (23) umfassen, das mit einer Zahnstange (27) zusammenwirkt, die fest mit dem Zinnenkranz (13) verbunden ist.

12. Verbindungsvorrichtung nach Anspruch 10, **dadurch gekennzeichnet, dass** die Mittel eine Steuerspindel (33) umfassen, die mit einer Mutter zusammenwirkt, welche fest mit dem Zinnenkranz (13) verbunden ist.

13. Gondel für ein Flugzeugtriebwerk, **dadurch gekennzeichnet, dass** sie eine Verbindungsvorrichtung nach einem der vorstehenden Ansprüche beinhaltet.

## Claims

1. A device for linking a front frame of a thrust reverser to a fan casing (1), comprising:
- a crenellated flange (3) secured to said front frame,
- an annular part (11) for receiving this flange (3), secured to said fan casing (1), and
- a crenellated crown (13) with a shape complementary with that of said flange (3), pivotally mounted on said annular part (11),
said crenellated flange (3), said annular part (11) and said crenellated crown (13) being shaped so that a rotation of said crown (13) relative to said annular part (11) causes locking of this flange (3) against this annular part (11), by the cooperation of the respective crenellations of said flange (3) and of said crown (13), and
said annular part (11) having a radial lip (14) for abutting against the crenellations of said flange (3), covered by said crenellated crown (13)
**characterized in that** the crenellated flange (3) includes a series of teeth (5) and recesses (7) defining crenellations and **in that** the crenellated crown (13) includes teeth (15) and recesses (17) defining crenellations complementary with the teeth (5) and with the recesses (7) of the crenellated flange (3).

2. The linking device according to claim 1, **characterized in that** said radial lip (14) has an i-shaped section.

3. The linking device according to claim 1, **characterized in that** said radial lip (14) has an L-shaped section.

4. The linking device according to claim 3, **characterized in that** said radial lip (14) and the crenellations of said flange (3) have mutual cooperation surfaces (S) inclined with respect to a transverse plane.

5. The linking device according to claim 4, **characterized in that** the value of the inclination (a) of said surfaces is in the range of 30 degrees.

6. The linking device according to any one of the preceding claims, **characterized in that** the teeth (5) of said crenellations have circumferential chamfers (9).

7. The linking device according to any one of the preceding claims, **characterized in that** said crenellated flange and said annular part have radial chamfers (19, 21).

8. The linking device according to any one of the preceding claims, **characterized in that** the crenellations of said flange (3) and of said crown (13) have a larger circumferential length at 12 O'clock than at 6 O'clock.

9. The linking device according to any one of the preceding claims, **characterized in that** said annular part (11) includes a seal (23) adapted to be compressed by said crenellated flange (3).

10. The linking device according to any one of the preceding claims, **characterized in that** said crenellated crown (13) includes a groove (25), crossed by means for rotating said crown.

11. The linking device according to claim 10, **characterized in that** said means comprise a pinion (23) cooperating with a rack (27) secured to said crenellated crown (13).

12. The linking device according to claim 10, **characterized in that** said means comprise a control screw (33) cooperating with a nut secured to said crenellated crown (13).

13. A nacelle for an aircraft turbojet engine, **characterized in that** it embeds a linking device in accordance with any one of the preceding claims.
